# EUROPÄISCHE PATENTSCHRIFT

(11) **EP 2 830 195 B1**
(45) Veröffentlichungstag und Bekanntmachung des Hinweises auf die Patenterteilung: **26.04.2017**
(21) Anmeldenummer: 13178013.2
(22) Anmeldetag: 25.07.2013
(51) Int. Cl.: H02K 3/52, H02K 15/06

(54) **Pol für eine elektrische Maschine**
Pole for an electric machine
Pôle pour une machine électrique

(43) Veröffentlichungstag der Anmeldung: 28.01.2015
(73) Patentinhaber: Siemens Aktiengesellschaft, 80333 München (DE)
(72) Erfinder: Bogdan, Zolt, 24000 Subotica (RS); Brach, Karsten, 13589 Berlin (DE); Hartmann, Ulrich, 14197 Berlin (DE); Rakowicz, Marian, 10247 Berlin (DE); Schwengber, Robert, 15907 Lübben (DE); Schönbauer, Norbert, 94072 Bad Füssing (DE)

(56) Entgegenhaltungen:
- DE-C- 864 715
- FR-A- 954 931
- GB-A- 720 806
- GB-A- 773 665
- GB-A- 1 185 068
- JP-U- S 598 252

## Beschreibung

Die Erfindung betrifft einen Pol für eine elektrische Maschine, der eine Spule, einen Polkörper und/oder einen Polschuh aufweist. Der Pol weist mindestens eine Klammer zum Lagern der Spule an mindestens einer Außenseite der Spule auf, wobei die Klammer (4i) an dem Polkörper (11) und/oder an dem Polschuh (12) mittels eines Formschlusses und/oder mittels eines Kraftschlusses befestigt ist.

Außerdem betrifft die Erfindung ein Verfahren zum Herstellen eines Pols für eine elektrische Maschine, das folgende Schritte umfasst: Wickeln einer Spule, Anordnen einer Klammer an mindestens einer Außenseite der Spule und Befestigen der Klammer an einem Polkörper und/oder an einem Polschuh.

Die FR 954931 A beschreibt eine Klammer zum Lagern einer Spule an einer Außenseite der Spule, wobei die Klammer auf einer Seite an einem Polschuh und auf der anderen Seite an einem Polkörper befestigt ist.

Die DE 864 715 C beschreibt einen Spulenkörper, der mittels einer umlaufenden Bandage aus unmagnetischem Draht an einem Polkern befestigt ist.

Die GB 720,806 beschreibt ein Band, mit dem eine Erregerspule an einem Pol einer elektrischen Maschine befestigt ist.

Die GB 773,665 beschreibt einen Haltegurt, der an seinen beiden Enden je eine Schlaufe aufweist, die jeweils einen Wicklungsstab umschlingt.

Die GB 1,185,068 beschreibt ein umlaufendes Band.

Die JP S59-8252 beschreibt je ein Befestigungsband, mit dem eine Spule an einem Pol befestigt ist.

Pole zur Erregung von stromerregten Synchrongeneratoren weisen eine Spule zur Erzeugung eines Magnetfeldes mittels eines Erregerstroms auf. Für Kräfte, die insbesondere in einer Tangentialrichtung (Umfangsrichtung) eines Läufers der Synchronmaschine wirken, reicht eine Eigensteifigkeit der Leiter der Spule nicht aus, sodass diese Tangentialkräfte mittels einer geeigneten Lagerung der Leiter abzufangen sind. Hierzu wurden bisher mehrere Halteklammern oder Haltebügel an einem selbsttragenden Teil des Pols (beispielsweise an einem Polschuh und/oder an einem Polkörper) mittels Schweißnähten (also stoffschlüssig) befestigt. Die Anbringung einer Schweißnaht zwischen dem tragenden selbsttragenden Teil des Pols und der Halteklammer oder dem Haltebügel ist nicht nur arbeitszeitaufwändig, sondern birgt auch das Risiko einer Beschädigung oder Verschmutzung des fast fertigen Pols mit Rückständen aus den Schweißarbeiten. Das Risiko einer Beschädigung oder Verschmutzung des fast fertigen Pols kann einen erhöhten Prüfaufwand und/oder ein Ausfallrisiko der elektrischen Maschine im Wirkbetrieb zur Folge haben.

Der Erfindung liegt die Aufgabe zugrunde, einen Pol bereitzustellen, der sich mit geringerem Aufwand herstellen lässt und/oder der mit einer geringeren Fehlerrate herstellbar ist und/oder dessen Herstellungsverfahren eine automatisierte Fertigung erleichtert.

Erfindungsgemäß wird die Aufgabe durch einen Pol für eine elektrische Maschine gelöst, wobei der Pol eine Spule sowie einen Polkörper und/oder einen Polschuh aufweist. Außerdem weist der Pol mindestens eine Klammer zum Lagern der Spule an mindestens einer Außenseite der Spule auf, wobei die Klammer an dem Polkörper und/oder an dem Polschuh mittels eines Formschlusses und/oder mittels eines Kraftschlusses befestigt ist. Ein erstes Ende der Klammer ist mit einer Befestigungslasche verhakt, die an dem Polschuh befestigt ist. Die Außenseite der Spule kann eine Mantelseite, eine Längsseite, eine Stirnseite oder eine Transversalseite der Spule sein. Bei einer hybriderregten Maschine kann der Polkörper auch einen Permanentmagneten umfassen.

Entsprechend umfasst das Verfahren zum Herstellen eines Pols für eine elektrische Maschine folgende Schritte:
- Befestigen einer Befestigungslasche für die Klammer an einem Polschuh;
- Wickeln einer Spule;
- Anordnen einer Klammer an mindestens einer Außenseite der Spule;
- Einführen des Polkörpers in die Spule, wobei der Polschuh an dem Polkörper angeschweißt ist;
- Befestigen der Klammer an dem Polkörper und/oder an dem Polschuh mittels eines Formschlusses und/oder mittels eines Kraftschlusses;
- Verhaken eines ersten Endes der Klammer mit der Befestigungslasche.

Ein Konzept der vorliegenden Erfindung kann darin gesehen werden, dass die Klammer an dem Polkörper und/oder an dem Polschuh mittels eines Formschlusses und/oder mittels eines Kraftschlusses befestigt ist. Hierdurch können die bekannte Befestigung mittels Schweißnähten sowie die damit verbundenen obengenannten Nachteile (Arbeitszeitaufwand für die Schweißarbeiten und Gefahr einer Beschädigung der Wicklung durch die Schweißarbeiten) vermieden werden. Außerdem erleichtert das erfindungsgemäße Konzept eine automatisierte Herstellung des Pols. Folglich sind solche Weiterbildungen der beschriebenen Ausführungsformen der Erfindung besonders bevorzugt, in denen an dem Polkörper keine Klammer angeschweißt ist und/oder in denen an dem Polschuh keine Klammer angeschweißt ist. Unter Kraftschluss (Reibschluss) wird hier eine mechanische Verbindung von zwei Teilen bezeichnet, die darauf beruht, dass sich die beiden Teile aufgrund einer Reibkraft nicht relativ zueinander bewegen. Eine Kraftschlussverbindung ist hier typischerweise eine Klemmverbindung.

Eine Ausführungsform sieht vor, dass ein Abschnitt der Klammer in einer Vertiefung des Polkörpers angeordnet ist. Hierdurch kann die Klammer gegen Verrutschen in einer Radialrichtung der Spule geschützt werden.

Es kann zweckmäßig sein, wenn die Klammer auf einer Transversalseite des Pols umläuft. Hierdurch kann eine mechanische Stabilität des Pols verbessert werden, indem eine Belastung eines Randbereiches des Polkörpers und/oder der Spule auf Zug vermieden wird.

Eine Ausführungsform sieht vor, dass ein erstes und/oder ein zweites Ende der Klammer in jeweils einer Vertiefung des Polkörpers angeordnet ist. Hierdurch kann eine formschlüssige und/oder kraftschlüssige Befestigung der Klammer an dem Polkörper erfolgen.

Auch ist es möglich, dass ein erstes und/oder ein zweites Ende der Klammer in jeweils einer Vertiefung des Polschuhs angeordnet ist. Hierdurch kann eine formschlüssige und/oder kraftschlüssige Befestigung der Klammer an dem Polschuh erfolgen. Wenn beide Enden der Klammer am selben Polschuh befestigt sind, kann eine Längskraft (typischerweise Zugkraft) durch die Klammer ausschließlich über den Polschuh geleitet werden und eine Ableitung der Längskraft über eine weitere Zwischenkomponente (beispielsweise einen Polschuh oder einen Polträger) sowie eine damit verbundene mechanische Belastung der weiteren Zwischenkomponente durch die Längskraft vermieden werden.

Eine weitere Ausführungsform sieht vor, dass ein zweites Ende der Klammer mit einer Befestigungslasche verhakt ist, die an dem Polschuh und/oder an dem Polkörper befestigt ist. Hierdurch kann die Klammer bereits fixiert werden, ohne dass der Pol auf einem Polträger oder einem Transportträger befestigt ist.

Eine Weiterbildung sieht vor, dass ein erstes und/oder ein zweites Ende der Klammer jeweils zwischen dem Polschuh und der Spule kraftschlüssig befestigt ist, wobei der Kraftschluss über eine Befestigung des Pols an einem Polträger vermittelt wird. Hierdurch kann eine Struktur des Pols und/oder die Herstellung des Pols vereinfacht werden.

Unabhängig davon sieht eine weitere Weiterbildung vor, dass ein erstes und/oder ein zweites Ende oder ein Abschnitt der Klammer an jeweils einer Stufe des Polträgers mindestens einseitig formschlüssig gelagert ist, wobei der Formschluss über eine Befestigung des Pols an einem Polträger vermittelt wird. Auch hierdurch kann eine Struktur des Pols und/oder die Herstellung des Pols vereinfacht werden.

Das Verfahren zum Herstellen eines Pols für eine elektrische Maschine kann auch folgenden Schritt umfassen: Befestigen einer Befestigungslasche für die Klammer an dem Polkörper. Hierdurch kann an dem Polkörper eine Befestigung für die Klammer vorbereitet werden, die nach einem Einführen des Polkörpers in die Spule örtlich nicht mehr zugänglich ist oder nach einem Einführen des Polkörpers in die Spule hinsichtlich einer Art des Befestigungsverfahrens (beispielsweise Schweißen) unerwünscht ist. Insbesondere kann die Befestigungslasche vor dem Einführen des Polkörpers in die Spule an dem Polschuh und/oder an dem Polkörper angeschweißt werden. Alternativ oder zusätzlich ist auch vorstellbar, dass die Befestigungslasche vor einem Zusammenfügen von Polschuh und Polkörper in eine Aussparung zwischen dem Polschuh und dem Polkörper eingelegt wird, um sie in dem zusammengefügten Gebilde von Polschuh und Polkörper formschlüssig und/oder kraftschlüssig zu lagern.

Die Erfindung ist anhand der beigefügten Zeichnungen näher erläutert, in denen zeigen:
- FIG 1: schematisch von links nach rechts eine Abfolge von Schritten eines ersten Verfahrens zur Herstellung eines Pols für eine elektrische Maschine;
- FIG 2: einen Ablauf des ersten Verfahrens zum Herstellen eines Pols für eine elektrische Maschine;
- FIG 3: schematisch eine perspektivische Ansicht auf eine Polschuhseite und eine Stirnseite eines Pols für eine elektrische Maschine gemäß einer ersten Ausführungsform des Pols;
- FIG 4: schematisch eine perspektivische Ansicht auf eine Polkörperseite, eine Stirnseite und eine Längsseite eines Pols für eine elektrische Maschine gemäß einer zweiten Ausführungsform des Pols;
- FIG 5: schematisch eine perspektivische Ansicht auf einen Pol für eine elektrische Maschine mit mehreren Polschuhen und mehreren Klammern zur Lagerung von Leitern mindestens einer Wicklung des Pols gemäß einer dritten Ausführungsform des Pols;
- FIG 6: schematisch eine Teilansicht (in Richtung parallel zu einer Rotationsachse eines Läufers einer elektrischen Maschine) auf einen Pol gemäß einer vierten Ausführungsform ohne einen aufgesetzten Polschuh;
- FIG 7: schematisch eine Teilansicht (in Richtung parallel zu einer Rotationsachse eines Läufers einer elektrischen Maschine) auf einen Pol gemäß einer fünften Ausführungsform mit einem aufgesetzten Polschuh;
- FIG 8: einen schematischen Detailschnitt durch einen Pol gemäß einer sechsten Ausführungsform des Pols entlang einer Transversalfläche eines Läufers einer elektrischen Maschine;
- FIG 9: einen Ablauf eines zweiten Verfahrens zum Herstellen eines Pols für eine elektrische Maschine.

Die nachfolgend näher geschilderten Ausführungsbeispiele stellen bevorzugte Ausführungsformen der vorliegenden Erfindung dar.

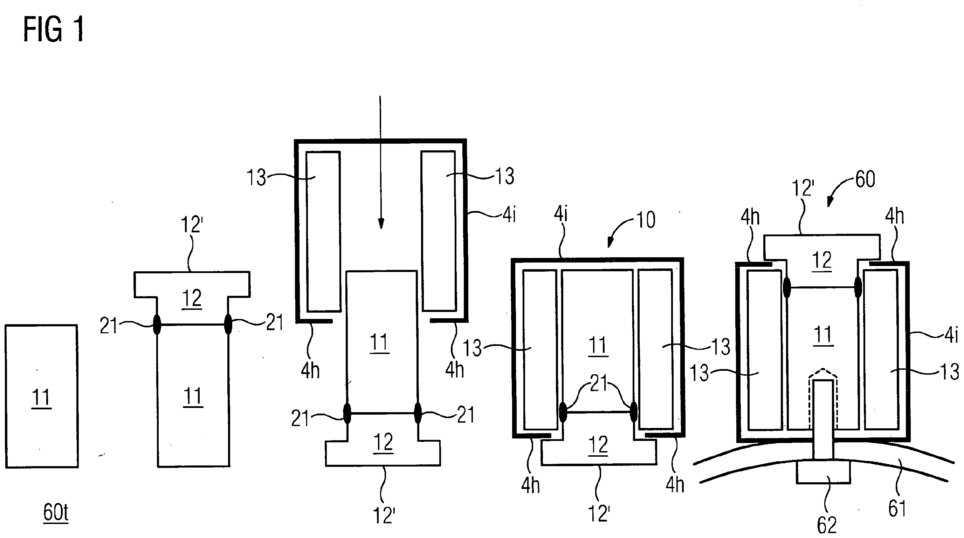

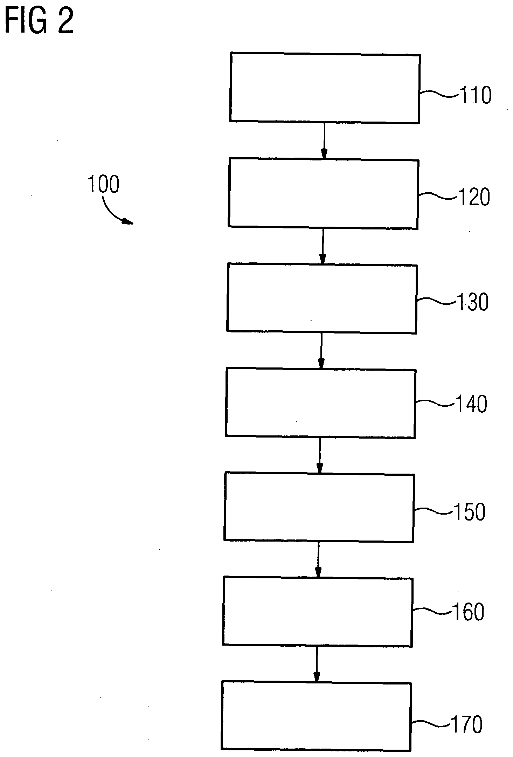

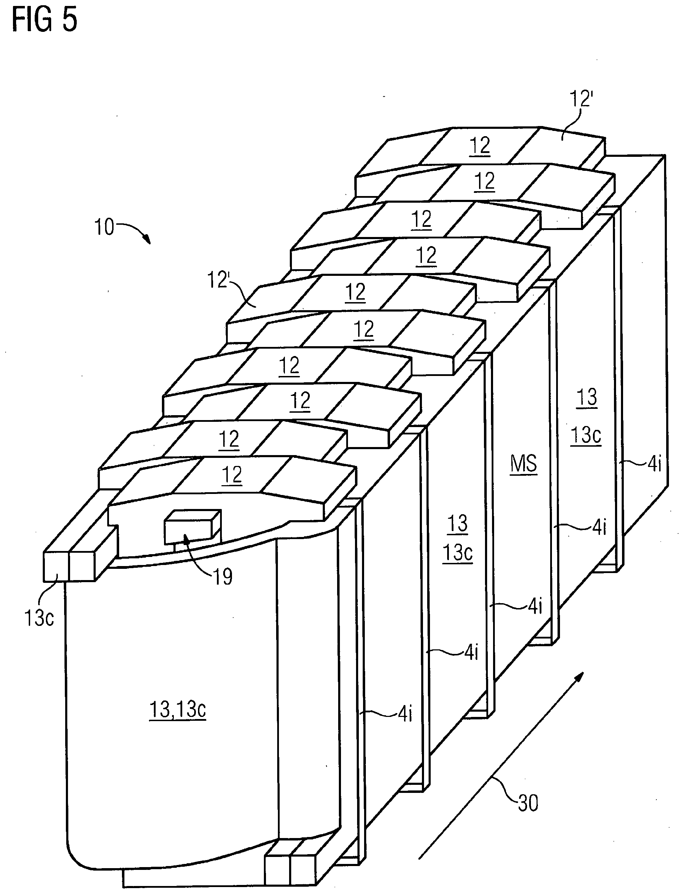

Die FIG 1 zeigt von links nach rechts eine Abfolge von Zwischenstufen eines Verfahrens 100 (siehe FIG 2) zur Herstellung eines Pols 10 für eine elektrische Maschine. In einem ersten Schritt 110 wird ein Polkörper 11 bereitgestellt. Der Polkörper 11 besteht in der Regel aus einem massiven Metallteil oder einem massiven Teil einer Metalllegierung, beispielsweise aus Stahl. In einem zweiten Schritt 120 wird ein Polschuh 12 aus einem Blechpaket 12' bereitgestellt. Dessen Bleche weisen jeweils eine elektrisch isolierende Schicht auf, welche das jeweilige Blech gegenüber einem benachbarten Blech elektrisch isoliert. In einem dritten Schritt 130 wird eine Schweißnaht 21 zwischen dem Polkörper 11 und dem Blechpaket 12' entlang der Richtung 30 (siehe FIG 5) einer zukünftigen Rotationsachse angebracht. Mit 'Rotationsachse' ist hier und im Folgenden die Rotationsachse des Läufers 60 einer elektrischen Maschine gemeint, wenn der Pol 10 an einem Polträger 61 des Läufers 60 der elektrischen Maschine bestimmungsgemäß befestigt ist. In einem vierten Schritt 140 wird die Spule 13 auf einer Wickelvorrichtung auf einem Wickeldorn gewickelt. Alternativ ist es auch vorstellbar, die Spulenwindungen im vierten Schritt 140 Windung für Windung in einen Käfig, in einen Behälter oder in ein Rohr einzulegen, einzupressen oder einzuschmiegen.

Die Windungen bleiben nun vorerst weiterhin mittels einer (in den Figuren nicht gezeigten) Fixierungsvorrichtung (beispielsweise dem gerade erwähnten Käfig) provisorisch fixiert. Wenn ein Wickeldorn verwendet wurde, wird der Wickeldorn typischerweise entfernt. Darauf kann verzichtet werden, wenn der Wickeldorn eine so dünne Hülse (beispielsweise aus einem glasfaserverstärkten, kohlenstofffaserverstärkten und/oder aramidfaserverstärkten Material) darstellt, dass er dauerhaft (also auch im Wirkbetrieb) in dem Spalt zwischen Polkörper und Spule verbleiben kann. Die Hülse kann dann eventuell auch die Funktion einer Quellmatte erfüllen.

In einem fünften Schritt 150 wird auf der Außenseite der Spule 13 mindestens eine Klammer 4i angeordnet. In einem sechsten Schritt 160 wird die gewickelte Spule 13 gemeinsam mit der mindestens einen Klammer 4i über den Polkörper 11 gestülpt oder auf den Polkörper 11 aufgesteckt (der bereits an dem Polschuh 12 angeschweißt ist). Alternativ kann der Polkörper 11 (an dem der Polschuh 12 bereits angeschweißt ist), in die gewickelte Spule 13 eingesteckt werden. Durch das Zusammenfügen von Polkörper 11 und Spule 13 wird eine Haltelasche 4h an einem oder beiden Enden 4i', 4i" mindestens einer der Klammern 4i zwischen Polschuh 12 und Spule 13 eingeklemmt, sodass sich die Klammer 4i nicht mehr aus dieser Position lösen oder entfernen kann. Für die Fixierung der Klammer 4i beim oder nach dem Zusammenfügen von Polkörper 11 und Spule 13 gibt es verschiedene Ausführungsformen, die im Folgenden beschrieben werden. In einem siebten Schritt 170 wird der Pol 10 mittels eines Befestigungsmittels 62 (typischerweise mehreren Schrauben, Nieten oder Ziehnieten) an einem Polträger 61 befestigt.

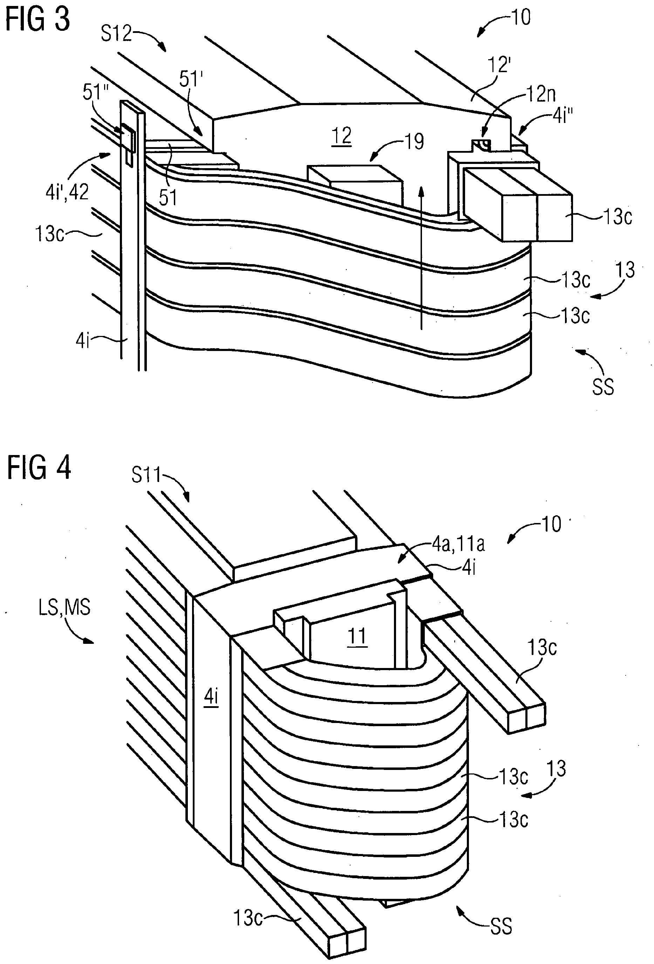

Die FIG 3 erläutert anhand einer perspektivischen Ansicht auf eine Polschuhseite S12 und eine Stirnseite SS eines Pols 10 für eine elektrische Maschine eine erste Befestigungsmöglichkeit einer Klammer 4i an einem Polschuh 12 und/oder einem (in der Figur nicht dargestellten) Polkörper 11. Hierzu ist eine Befestigungslasche 51 vorgesehen, die (typischerweise vor dem Zusammenfügen von Polkörper 11 und Spule 13) an dem Polschuh 12 und/oder dem Polkörper 11 befestigt wird. Die Befestigung kann beispielsweise mittels Anschweißens der Befestigungslasche 51 an den Polkörper 11 und/oder den Polschuh 12 erfolgen. Alternativ oder zusätzlich kann ein erstes Ende 51' der Befestigungslasche 51 in eine (in den Figuren nicht gezeigte) Aussparung zwischen Polkörper 11 und Polschuh 12 eingelegt werden, bevor der Polschuh 12 an dem Polkörper 11 angeschweißt wird. Ein Ende 4i' der Klammer 4i kann zum Durchführen eines zweiten Endes 51" der Befestigungslasche 51 ein Befestigungsloch 42 aufweisen. Um die Klammer 4i an der Befestigungslasche 51 zu befestigen, kann die Klammer 4i etwas von der Befestigungslasche 51 weggebogen werden und die Befestigungslasche 51 dann in das Befestigungsloch 42 der Klammer 4i eingesteckt werden. Das zweite Ende 51" der Befestigungslasche 51 kann abgewinkelt sein. Die Befestigungslasche 51 kann beispielsweise aufgrund einer eigenen Federsteifigkeit oder aufgrund einer in der Figur nicht gezeigten Hinterkeilung der Befestigungslasche 51 das Befestigungsloch 42 der Klammer 4i mittels ihres abgewinkelten zweiten Endes 51" hinterhaken, sodass ein über Federkraft oder Hinterkeilung der Befestigungslasche 51 vermittelter Formschluss zwischen der Befestigungslasche 51 und der Klammer 4i erhalten bleibt.

Die FIG 4 zeigt eine perspektivische Ansicht auf eine Polkörperseite S11, eine Stirnseite SS und eine Längsseite LS eines Pols 10 für eine elektrische Maschine gemäß einer zweiten Ausführungsform des Pols 10. In dieser Ausführungsform, die mit jeder der anderen Ausführungsformen kombiniert werden kann, läuft die Klammer 4i (vorzugsweise einstückig) auf der Polkörperseite S11 um die Spule 13 und den Polkörper 11 um. Um magnetische Eigenschaften des Pols 10 weitgehend zu erhalten, ist es zweckmäßig, wenn der Polkörper 11 eine Aussparung 11a aufweist, in die ein Abschnitt der umlaufenden Klammer 4i einlegbar ist. Dies sollte mit möglichst wenig Spiel erfolgen, um an dieser Stelle durch die Aussparung 11a keinen weiteren Luftspalt in den magnetischen Erregerkreis einzufügen.

Die FIG 5 zeigt eine perspektivische Gesamtansicht auf einen Pol 10 für eine elektrische Maschine mit mehreren Polschuhen 12 und mehreren Klammern 4i zur Lagerung von Leitern 13c mindestens einer Wicklung des Pols 10 gemäß einer dritten Ausführungsform des Pols 10, die mit jeder der anderen Ausführungsformen kombiniert werden kann. Hier sind die Polschuhe 11 versetzt zueinander angeordnet, um eine Laufruhe der elektrischen Maschine zu verbessern.

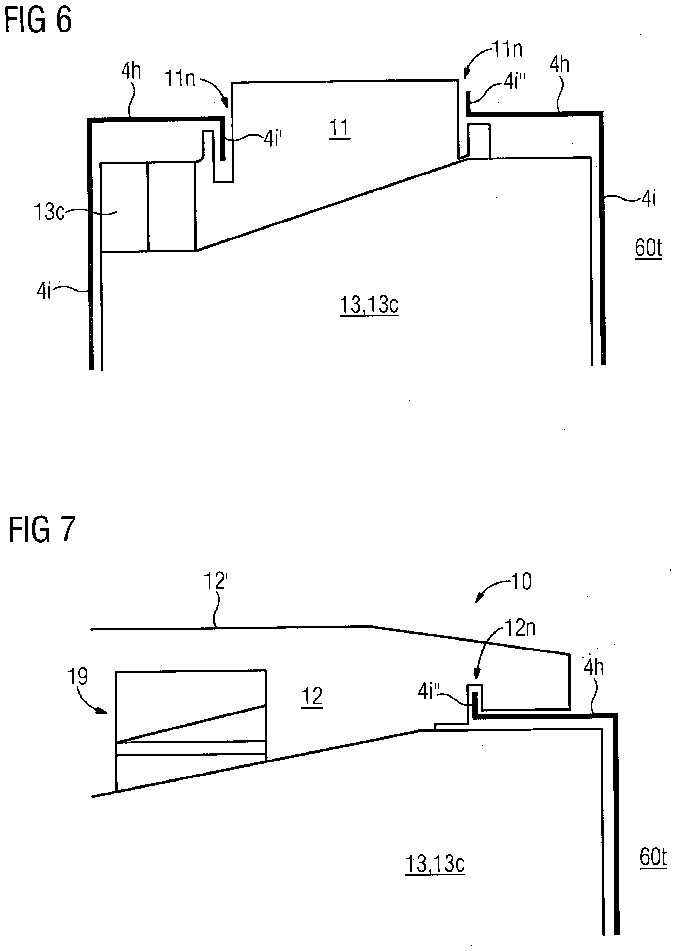

Die FIG 6 zeigt eine Teilansicht auf einen Pol 10 gemäß einer vierten Ausführungsform ohne einen aufgesetzten Polschuh 12.

Die vierte Ausführungsform kann mit jeder der anderen Ausführungsformen kombiniert werden. Die FIG 6 zeigt eine Klammer 4i deren abgewinkeltes erstes Ende 4i' dazu vorgesehen ist, in eine Aussparung oder Nut 11n des Polkörpers 11 einzuhaken. Bei dieser Befestigungsart der Klammer 4i wird entweder unterstellt, dass auch nach einem Zusammenfügen des Polkörpers 11 mit der Spule 13 noch genügend Raum neben dem zugehörigen Polschuh 12 oder zwischen dem zugehörigen Polschuh 12 und der Spule 13 verbleibt, um das abgewinkelte Klammerende 4i', 4i" auch nach dem Zusammenfügen des Polkörpers 11 mit der Spule 13 noch in die Aussparung oder Nut 11n des Polkörpers 11 einzufädeln und einzuhaken. Eine andere Möglichkeit besteht darin, dass der zugehörige Polschuh 12 erst nach dem Zusammenfügen von Polkörper 11 und Spule 13 auf eine andere Weise als Anschweißen (beispielsweise mittels Verkeilens oder mittels mindestens einer der Klammern 4i) an dem Polkörper 11 befestigt wird.

Die FIG 7 zeigt eine Klammer 4i deren abgewinkeltes zweites Ende 4i" entsprechend einer fünften Ausführungsform dazu vorgesehen ist, in eine Aussparung oder Nut 12n des Polschuhs 12 einzuhaken. Die FIG 7 zeigt das Konzept der fünften Ausführungsform nach dem Befestigen (beispielsweise Verkeilen mittels einer Fixierungsvorrichtung 19) eines Polschuhs 12 an dem Polkörper 11 oder nach dem Zusammenfügen von Polkörper 11 und Spule 13.

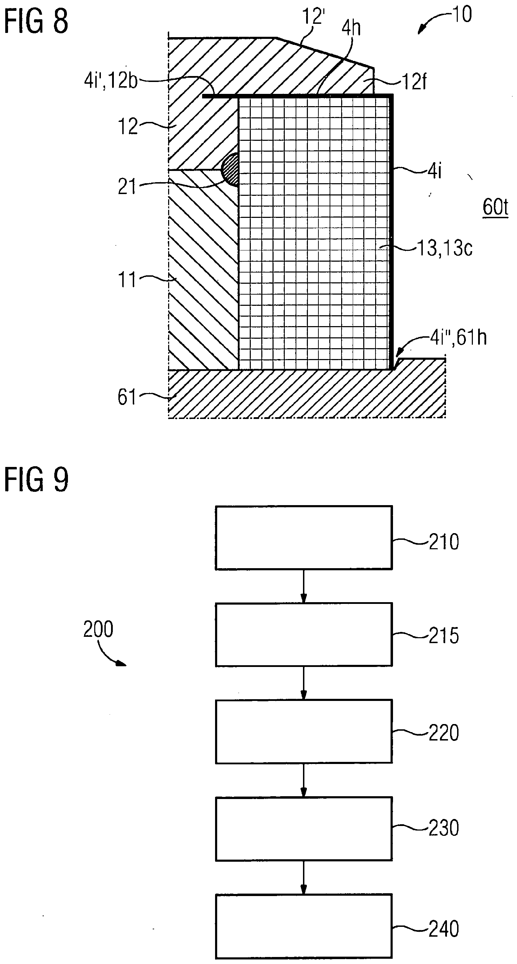

Die FIG 8 zeigt einen Detailschnitt durch einen Pol 10 gemäß einer sechsten Ausführungsform des Pols 10 entlang einer Transversalebene 60t eines Läufers 60 einer elektrischen Maschine. Die sechste Ausführungsform kann mit jeder der anderen Ausführungsformen kombiniert werden. Für die sechste Ausführungsform kann in den Blechen des Polschuhs 12 eine Aussparung 12b vorgesehen werden (die bezogen auf die bestimmungsgemäße Verwendung vorzugsweise tangential zur Rotationsachse des Läufers der elektrischen Maschine verläuft). Oder es wird nach dem Anschweißen des Polschuhs 12 an den Polkörper 11 eine entsprechende Bohrung 12b in dem Polschuh 12 angebracht. Das erste Klammerende 4i' kann dann vor dem Zusammenfügen von Polkörper 11 und Spule 13 in die Aussparung oder Bohrung 12b eingefügt werden. Das Ende 4i' der Klammer 4i kann in der Bohrung 12b mittels eines Klebers, mittels eines Dübels oder (nach einem Ankernagelprinzip) mittels Widerhaken befestigt werden. Alternativ oder zusätzlich ist es auch möglich, das erste Klammerende 4i' beim Befestigen des Pols 10 auf dem Polträger 61 zwischen der Spule 13 und einem Flansch 12f des Polschuhs 12 kraftschlüssig zu befestigen (einzuklemmen). Beim Befestigen des Polkörpers 11 an dem Polträger 61 (nach dem Zusammenfügen von Polkörper 11 und Spule 13) wird das zweite Klammerende 4i" vor eine Rückhaltestufe 61h im Polträger 61 positioniert, sodass sie sich die Klammer 4i auch im Bereich des Polträgers 61 nicht mehr von dem Polkörper 11 entfernen kann und die Rückhaltestufe 61 die Spule 13 in Tangentialrichtung des Polträgers 60 lagert.

Das in FIG 9 gezeigte Verfahren 200 zum Herstellen eines Pols 10 für eine elektrische Maschine umfasst folgende Schritte. In einem ersten Schritt 210 wird eine Spule 13 auf einen (in den Figuren nicht dargestellten) vorläufigen Wickelkörper gewickelt. In einem zweiten Schritt 220 wird eine Klammer 4i an mindestens einer Außenseite der Spule 13 angeordnet. In einem dritten Schritt 230 wird ein Polkörper 11 in die Spule 13 eingeführt. In einem vierten Schritt 240 wird eine Klammer 4i an dem Polkörper 11 und/oder an einem Polschuh 12 mittels eines Formschlusses und/oder mittels eines Kraftschlusses befestigt.

Das Verfahren 200 kann auch den Schritt 215 eines Befestigens einer Befestigungslasche 51 an dem Polschuh 12 und/oder an dem Polkörper 11 umfassen. Der Schritt 215 des Befestigens einer Befestigungslasche 51 für die Klammer 4i an dem Polschuh 12 und/oder an dem Polkörper 11 erfolgt vorzugsweise vor dem Schritt 230 des Einführens des Polkörpers 11 in die Spule 13. Je nach Konstruktion kann der Schritt 220 des Anordnens der Klammer 4i an mindestens einer Außenseite der Spule dann vor oder auch nach dem Schritt 230 des Einführens des Polkörpers 11 in die Spule 13 erfolgen. Unabhängig davon kann der Schritt 240 des Befestigens einer Klammer 4i an dem Polkörper 11 und/oder an einem Polschuh 12 mittels eines Formschlusses und/oder mittels eines Kraftschlusses dann vor oder auch nach dem Schritt 230 des Einführens des Polkörpers 11 in die Spule 13 erfolgen.

Für eine Serienfertigung ist es zweckmäßig, Rotorspulen 13 nicht auf die Polkörper 11 direkt zu wickeln, sondern auf speziellen Maschinen, um Fertigungszeiten zu minimieren und/oder eine Maschinenauslastung zu optimieren. Das Montieren der Spule 13 auf den Polkörper 11 erfolgt dann in einem nachfolgenden Schritt. In einem abschließenden Schritt werden die Pole 10 mit dem jeweils zugehörigen Polträger 61 (eines Läufersegments) verbunden und das gesamte Läufersegment getränkt. Für den Wirkbetrieb kann eine individuelle Fixierung der Spulen 13 am Polkörper 11 durch einen vorgefertigten, standardisierten Käfig (oder vorgefertigte, standardisierte Klammern 4i) ersetzt werden, der (bzw. die) formschlüssig, kraftschlüssig und/oder stoffschlüssig mit dem Polkörper 11 verbunden wird (bzw. werden). Vorzugsweise wird hierbei auf eine Schweißverbindung zum Befestigen des Käfigs (bzw. der Klammern 4i) verzichtet. Fertigungstoleranzen können durch Verwendung von Quellmatten ausgeglichen werden.

Auf diese Weise können Pole 10 für verschiedene Produkte (beispielsweise für Windkraft, Fördertechnik, Mühlenantriebe) auf einer selben Fertigungsstraße gefertigt werden, wodurch eine Serienfertigung kostengünstiger und mit höherer Qualität erfolgen kann als bisher.

Ein Pol 10 für eine elektrische Maschine weist eine Spule 13, einen Polkörper 11 und/oder einen Polschuh 12 sowie mindestens eine Klammer 4i zum Lagern der Spule 13 an mindestens einer Außenseite LS, MS, SS, TS der Spule 13 auf. Die Klammer 4i ist an dem Polkörper 11 und/oder an dem Polschuh 12 mittels eines Formschlusses und/oder mittels eines Kraftschlusses befestigt.

Ein Verfahren 200 zum Herstellen eines Pols 10 für eine elektrische Maschine umfasst folgende Schritte: Wickeln 210 einer Spule 13, Anordnen 220 einer Klammer 4i an mindestens einer Außenseite LS, MS, SS, TS der Spule 13, Einführen 230 eines Polkörpers 11 in die Spule 13, Befestigen 240 der Klammer 4i an dem Polkörper 11 und/oder an einem Polschuh 12 mittels eines Formschlusses und/oder mittels eines Kraftschlusses.

## Patentansprüche

1. Pol (10) für eine elektrische Maschine, wobei der Pol (10) aufweist:
- eine Spule (13);
- einen Polkörper (11) und/oder einen Polschuh (12);
- mindestens eine Klammer (4i) zum Lagern der Spule (13) an mindestens einer Außenseite (LS, MS, SS, TS) der Spule (13), wobei die Klammer (4i) an dem Polkörper (11) und/ oder an dem Polschuh (12) mittels eines Formschlusses und/ oder mittels eines Kraftschlusses befestigt ist;
**dadurch gekennzeichnet, dass** ein erstes (4i') Ende der Klammer (4i) mit einer Befestigungslasche (51) verhakt ist, die an dem Polschuh (12) befestigt ist.

2. Pol (10) nach Anspruch 1, **dadurch gekennzeichnet, dass** ein Abschnitt (4i', 4a) der Klammer (4i) in einer Vertiefung (11a, 11n) des Polkörpers (11) angeordnet ist.

3. Pol (10) nach Anspruch 1 oder 2, **dadurch ge - kennzeichnet,** dass die Klammer (4i) auf einer Transversalseite (TS) des Pols (10) umläuft.

4. Pol (10) nach einem der Ansprüche 1 bis 3, **dadurch gekennzeichnet, dass** ein erstes (4i') und/ oder ein zweites (4i") Ende der Klammer (4i) in jeweils einer Vertiefung (11n) des Polkörpers (11) angeordnet ist.

5. Pol (10) nach einem der Ansprüche 1 bis 4, **dadurch gekennzeichnet, dass** ein erstes (4i') und/oder ein zweites (4i") Ende der Klammer (4i) in jeweils einer Vertiefung (12n) des Polschuhs (12) angeordnet ist.

6. Pol (10) nach einem der Ansprüche 1 bis 5, **dadurch gekennzeichnet , dass** ein zweites (4i") Ende der Klammer (4i) mit einer Befestigungslasche (51) verhakt ist, die an dem Polschuh (12) und/oder an dem Polkörper (11) befestigt ist.

7. Pol (10) nach einem der Ansprüche 1 bis 6, **dadurch gekennzeichnet, dass** ein erstes (4i') und/ oder ein zweites (4i") Ende der Klammer (4i) jeweils zwischen dem Polschuh (12) und der Spule (13) kraftschlüssig befestigt ist, wobei der Kraftschluss über eine Befestigung des Pols (10) an einem Polträger (61) vermittelt wird.

8. Pol (10) nach einem der Ansprüche 1 bis 7, **dadurch gekennzeichnet, dass** ein erstes (4i') und/ oder ein zweites (4i") Ende und/oder ein Abschnitt (4a) der Klammer (4i) an jeweils einer Stufe (61h) des Polträgers (61) mindestens einseitig formschlüssig gelagert ist, wobei der Formschluss über eine Befestigung des Pols (10) an einem Polträger (61) vermittelt wird.

9. Verfahren (200) zum Herstellen eines Pols (10) für eine elektrische Maschine, wobei das Verfahren (100) folgende Schritte umfasst:
- Befestigen (215) einer Befestigungslasche (51) für die Klammer (4i) an einem Polschuh (12);
- Wickeln (210) einer Spule (13);
- Anordnen (220) einer Klammer (4i) an mindestens einer Außenseite (LS, MS, SS, TS) der Spule (13);
- Einführen (230) des Polkörpers (11) in die Spule (13), wobei der Polschuh (12) an dem Polkörper (11) angeschweißt ist;
- Befestigen (240) der Klammer (4i) an dem Polkörper (11) und/oder an dem Polschuh (12) mittels eines Formschlusses und/oder mittels eines Kraftschlusses;
- Verhaken eines ersten (4i') Endes der Klammer (4i) mit der Befestigungslasche (51).

10. Verfahren (200) nach Anspruch 9, **dadurch gekennzeichnet, dass** das Verfahren (200) auch folgenden Schritt umfasst:
- Befestigen (215) einer Befestigungslasche (51) für die Klammer (4i) an dem Polkörper (11).

## Claims

1. Pole (10) for an electric machine, wherein the pole (10) has:
- a coil (13);
- a pole body (11) and/or a pole shoe (12);
- at least one clip (4i) for mounting the coil (13) on at least one external side (LS, MS, SS, TS) of the coil (13), wherein the clip (4i) is fastened to the pole body (11) and/or to the pole shoe (12) by means of a form fit and/or by means of a force fit;
**characterised in that** a first (4i') end of the clip (4i) is locked by a fastening lug (51) which is fastened to the pole shoe (12).

2. Pole (10) according to claim 1, **characterised in that** a section (4i', 4a) of the clip (4i) is arranged in a depression (11a, 11n) of the pole body (11).

3. Pole (10) according to claim 1 or 2, **characterised in that** the clip (4i) runs around a transverse side (TS) of the pole (10).

4. Pole (10) according to one of claims 1 to 3, **characterised in that** a first (4i') and/or a second (4i") end of the clip (4i) is arranged in each case in a depression (11n) of the pole body (11).

5. Pole (10) according to one of claims 1 to 4, **characterised in that** a first (4i') and/or a second (4i") end of the clip (4i) is arranged in each case in a depression (12n) of the pole shoe (12).

6. Pole (10) according to one of claims 1 to 5, **characterised in that** a second (4i") end of the clip (4i) is locked by a fastening lug (51) which is fastened to the pole shoe (12) and/or to the pole body (11).

7. Pole (10) according to one of claims 1 to 6, **characterised in that** a first (4i') and/or a second (4i") end of the clip (4i) is fastened in each case between the pole shoe (12) and the coil (13) by force fit, wherein the force fit is imparted on a pole carrier (61) via a fastening of the pole (10).

8. Pole (10) according to one of claims 1 to 7, **characterised in that** a first (4i') and/or a second (4i") end and/or a section (4a) of the clip (4i) is mounted in each case on a step (61h) of the pole carrier (61) by form fit at least on one side, wherein the form fit is imparted on a pole carrier (61) via a fastening of the pole (10).

9. Method (200) for producing a pole (10) for an electric machine, wherein the method (100) comprises the following steps:
- fastening (215) of a fastening lug (51) for the clip (4i) to a pole shoe (12);
- winding (210) of a coil (13);
- arrangement (220) of a clip (4i) on at least one external side (LS, MS, SS, TS) of the coil (13);
- insertion (230) of the pole body (11) into the coil (13), wherein the pole shoe (12) is welded to the pole body (11);
- fastening (240) of the clip (4i) to the pole body (11) and/or to the pole shoe (12) by means of a form fit and/or by means of a force fit;
- locking of a first (4i') end of the clip (4i) to the fastening lug (51).

10. Method (200) according to claim 9, **characterised in that** the method (200) also comprises the following step:
- fastening (215) of a fastening lug (51) for the clip (4i) to the pole body (11).

## Revendications

1. Pôle (10) pour une machine électrique, dans lequel le pôle (10) a :
- une bobine (13) ;
- un corps (11) polaire et/ou un épanouissement (12) polaire ;
- au moins un crampon (4i) pour le montage de la bobine (13) sur au moins un côté (LS, MS, SS, TS) extérieur de la bobine (13), le crampon (4i) étant fixé au corps (11) polaire et/ou à l'épanouissement (12) polaire au moyen d'une complémentarité de forme et/ou au moyen d'une coopération de force ;
**caractérisé en ce qu'**une première (4i') extrémité du crampon (4i) est accrochée à une patte (51) de fixation, qui est fixée à l'épanouissement (12) polaire.

2. Pôle (10) suivant la revendication 1, **caractérisé en ce qu'**une partie (4i', 4a) du crampon (4i) est disposée dans une cavité (11a, 11n) du corps (11) polaire.

3. Pôle (10) suivant la revendication 1 ou 2, **caractérisé en ce que** le crampon (4i) fait le tour d'un côté (TS) transversal du pôle (10).

4. Pôle (10) suivant l'une des revendications 1 à 3, **caractérisé en ce qu'**une première (4i') et/ou une seconde (4i") extrémité du crampon (4i) est disposée dans respectivement une cavité (11n) du corps (11) polaire.

5. Pôle (10) suivant l'une des revendications 1 à 4, **caractérisé en ce qu'**une première (4i') et/ou une seconde (4i") extrémité du crampon (4i) est disposée dans respectivement une cavité (12n) de l'épanouissement (12) polaire.

6. Pôle (10) suivant l'une des revendications 1 à 5, **caractérisé en ce qu'**une seconde (4i") extrémité du crampon (4i) est accrochée à une patte (51) de fixation, qui est fixée sur l'épanouissement (12) polaire et/ou sur le corps (11) polaire.

7. Pôle (10) suivant l'une des revendications 1 à 6, **caractérisé en ce qu'**une première (4i') et/ou une seconde (4i") extrémité du crampon (4i) est fixée à coopération de force, respectivement entre l'épanouissement (12) polaire et la bobine (13), la coopération de force étant donnée par une fixation du pôle (10) à un support (61) de pôle.

8. Pôle (10) suivant l'une des revendications 1 à 7, **caractérisé en ce qu'**une première (4i') et/ou une seconde (4i") extrémité et/ou un tronçon (4a) du crampon (4i) est monté à complémentarité de forme, au moins d'un côté, sur respectivement un gradin (61h) du support (61) de pôle, la complémentarité de forme étant donnée par une fixation du pôle (10) à un support (61) de pôle.

9. Procédé (200) de fabrication d'un pôle (10) pour une machine électrique, le procédé (100) comprenant les stades suivants :
- fixation (215) d'une patte (51) de fixation du crampon (4i) à un épanouissement (12) polaire ;
- bobinage (210) d'une bobine (13) ;
- mise (220) d'un crampon (4i) sur au moins un côté (LS, MS, SS, TS) extérieur de la bobine (13) ;
- introduction (230) du corps (11) polaire dans la bobine (13), l'épanouissement (12) polaire étant soudé au corps (11) polaire ;
- fixation (240) du crampon (4i) au corps (11) polaire et/ou à l'épanouissement (12) polaire au moyen d'une complémentarité de forme et/ou au moyen d'une coopération de force ;
- accrochage d'une première (4i') extrémité du crampon (4i) à la patte (51) de fixation.

10. Procédé (200) suivant la revendication 9, **caractérisé en ce que** le procédé (200) comprend aussi le stade suivant : - fixation (215) d'une patte (51) de fixation du crampon (41) au corps (11) polaire.
